# EUROPÄISCHE PATENTSCHRIFT

(11) **EP 0 434 789 B1**
(45) Veröffentlichungstag und Bekanntmachung des Hinweises auf die Patenterteilung: **28.04.1993**
(21) Anmeldenummer: 90909045.8
(22) Anmeldetag: 07.06.1990
(51) Int. Cl.: B60T 13/14, B60T 13/58

(54) **BREMSANLAGE FÜR EINE EINACHSIGE ANHÄNGEEINHEIT**
BRAKE SYSTEM FOR A SINGLE-AXLE TRAILER
SYSTEME DE FREINAGE POUR REMORQUES A UN SEUL ESSIEU

(30) Priorität: 10.06.1989 DE 3919041
(43) Veröffentlichungstag der Anmeldung: 03.07.1991
(73) Patentinhaber: KOLLMEIER, Helmut, D-33719 Bielefeld (DE)
(72) Erfinder: KOLLMEIER, Helmut, D-33719 Bielefeld (DE)
(74) Vertreter: Schirmer, Siegfried, Dipl.-Ing.
(86) Internationale Anmeldenummer: DE9000437
(87) Internationale Veröffentlichungsnummer: WO9014975

(56) Entgegenhaltungen:
- EP-A- 0 053 651
- BE-A-69 780 6
- DE-A- 2 852 616
- US-A- 238 978
- US-A- 3 560 058
- US-A- 4 583 788

## Beschreibung

Die Erfindung betrifft eine Bremsanlage für eine an eine Zugeinheit, vorzugsweise einen Personenkraftwagen, lösbar angeschlossene einachsige Anhängeeinheit, mit einem hydraulischen Zweikreisbremssystem für die Zugeinheit und einer unter Zwischenschaltung eines flüssigkeitsdruckgesteuerten Relaisventils separat wirksamen und über ein Pumpenaggregat versorgten hydraulischen Zusatzbremsanlage für die Anhängeeinheit.

Zum Abbremsen einer an eine Zugeinheit angeschlossenen Anhängeeinheit ist es bekannt, Auflaufbremsen anzuordnen Bei Auflaufbremsen tritt die auf die Anhängeeinheit wirkende Bremskraft mit einer gewissen zeitlichen Verzögerung ein.

In der US-A-35 60 058 wird ein hydraulisches Bremssystem für ein beispielsweise mit einem Anhänger versehenes Fahrzeug beschrieben, bei dem ein Verteilerventil vorgesehen ist, das zur Zuführung der hydraulischen Flüssigkeit von einem Doppeltandemhauptzylinder sowohl zu dem Zweikreisbremssystem des Antriebsfahrzeugs als auch zum Bremssystem des Anhängers dient.

Durch die US-A-45 83 788 ist schließlich ein Bremssystem für eine Zug- und eine Anhängeeinheit bekannt, bei der ein hydraulisch vorgesteuertes Ventil über zwei separate Steuerleitungen jeweils mit den separat wirkenden Bremskreisen der Zugeinheit verbunden ist, und auf der anderen Seite ein durch die Druckflüssigkeit betriebenes Anhängerbremsventil betätigt, das den erst von einer Zusatzpumpe zu erzeugenden Flüssigkeitsstrom zur Anhängerbremse freigibt, wenn beide Bremssysteme der Zugeinheit gleichzeitig betätigt werden.

Der Erfindung liegt die Aufgabe zugrunde, eine Bremsanlage der aufgezeigen Gattung so auszubilden, daß bei geringem schaltungstechnischen Aufwand die Bremswirkung ohne zeitliche Verzögerung auf die Räder der Anhängeeinrichtung übertragbar ist und auch bei Ausfall eines Bremskreises eine Abbremsung der Anhängeeinheit gewährleistet ist.

Diese Aufgabe wird erfindungsgemäß dadurch gelöst, daß ein Doppelrückschlagventil vorgesehen ist, dessen beide Eingänge an je ein Bremssystem des Zweikreisbremssystems der Zugenheit angeschlossen sind und dessen Ausgang zur Steuerung der Zusatzbremsanlage mit einem flüssigkeitsdruckgesteuerten Relaisventil verbunden ist, wobei das Relaisventil in den mit einem Druckspeicher ausgerüsteten gesonderten Bremsmittelkreislauf der Zusatzbremsanlage zur Freigabe des Öldrucks des Druckspeichers eingebunden ist.

Vorteilhafterweise ist das Doppelrückschlagventil an der Hinterachse der Zugeinheit vorgesehen. Bei einem bevorzugten Ausführungsbeispiel ist zum Aufbau eines vorgegebenen Druckes in der Zusatzbremsanlage ain Pumpenaggregat angeordnet, dem ein Druckbegrenzungsventil und ein Druckschalter zugeordnet sein können.

Zweckmäßige Ausgestaltungen der Erfindung sind in den weiteren Unteransprüchen aufgezeigt.

Gemäß dem Erfindungsvorschlag wird selbst bei Ausfall eines Bremssystems die Bremswirkung der Zugeinheit unmittelbar auf das Relaisventil übertragen, und dadurch ohne Zwischenschaltung weiterer Schaltoperationen sofort die von dem Druckspeicher ausgehende Bremswirkung der Zusatzbremsanlage ausgelöst.

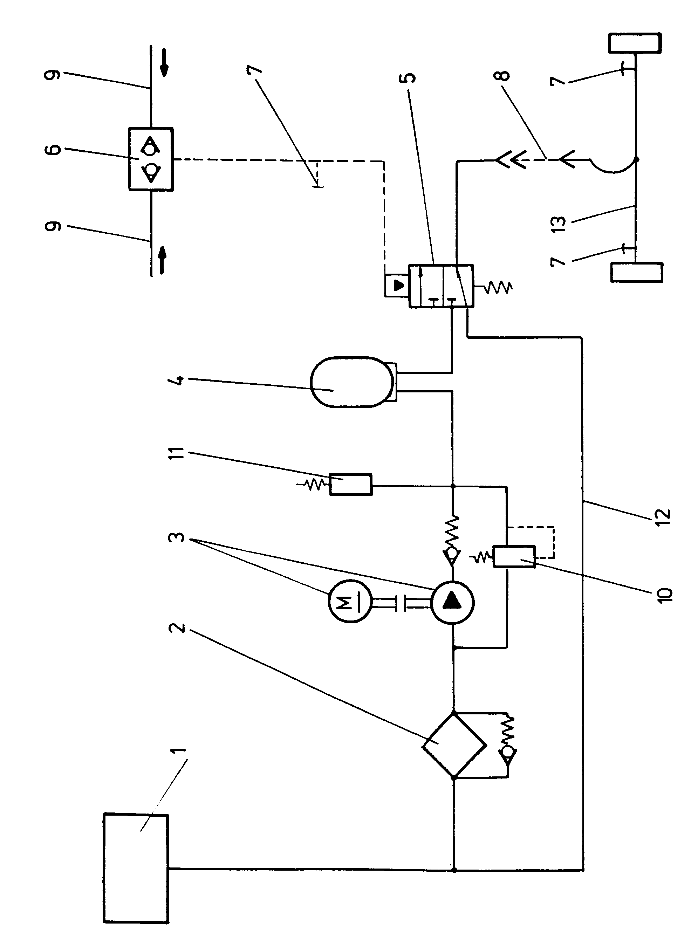

Ein Ausführungsbeispiel der Erfindung ist in der Zeichnung dargestellt und wird nachfolgend näher beschrieben. Die einzige Figur zeigt eine schematische Darstellung der Zusatzbremsanlage.

An das Zweikreisbremssystem eines Personenkraftwagens ist über ein Doppelrückschlagventil 6 eine Zusatzbremsanlage für eine einachsige Anhängeeinheit angeschlossen. Wie die Figur zeigt, ist das Doppelrückschlagventil 6 beidseitig an je ein Bremssystem der Hinterachse 9 des Personenkraftwagens angeordnet. Zur Steuerung der Zusatzbremsanlage dient ein Relaisventil 5, wobei zwischen dem Doppelrückschlagventil 6 und dem Relaisventil 5 ein Entlüftungsventil 7 angeordnet ist.

Das Relaisventil 5 wird über den Öldruck des Zweikreisbremssystems eingesteuert, wodurch der in der Zusatzbremsanlage durch einen gesonderten Ölkreislauf aufgebaute Druck freigegeben wird, der auf das Bremssystem der Achse 13 der Anhängeeinheit wirkt. Dieser wirksame Druck wird durch ein Druckbegrenzungsventil 10 vorgegeben. Beim Nachlassen des Bremspedals des Personenkraftwagens wird der Kolben des Relaisventils 5 der Zusatzbremsanlage in die Ausgangsstellung zurückgeführt. Zu diesem Zeitpunkt fließt die Bremsflüssigkeit über die Rückflußleitung 12 zurück.

Durch das Pumpenaggregat 3 wird der vorgegebene Druck im Druckspeicher 4 aufgebaut. Bei Erreichung des vorgegebenen Wertes schaltet das Pumpenaggregat 3 über den Druckschalter 11 ab. Zwischen dem Bremsflüssigkeits-Vorratsbehälter 1 und dem Pumpenaggregat 3 ist ein Saugfilter 2 angeordnet. Der Bremsleitung der Anhängeeinheit sind zwei Entlüftungsventile 7 zugeordnet. In der Leitung zwischen dem Personenkraftwagen und der Anhängeeinheit ist eine Trennkupplung 8 eingebaut. An der Anhängeeinheit ist außerdem noch eine mechanische Handbremse, die über einen Handhebel bedient wird, angeordnet.

## Patentansprüche

1. Bremsanlage für eine an eine Zugeinheit, vorzugsweise einen Personenkraftwagen, lösbar angeschlossene einachsige Anhängeeinheit, mit einem hydraulischen Zweikreisbremssystem für die Zugeinheit und einer unter Zwischenschaltung eines flüssigkeitsdruckgesteuerten Relaisventils (5) separat wirksamen und über ein Pumpenaggregat (3) versorgten hydraulischen Zusatzbremsanlage für die Anhängeeinheit, dadurch gekennzeichnet, daß ein Doppelrückschlagventil (6) vorgesehen ist, dessen beide Eingänge an je ein Bremssystem des Zweikreisbremssystems angeschlossen sind und dessen Ausgang zur Steuerung der Zusatzbremsanlage mit dem flüssigkeitsdruckgesteuerten Relaisventil (5) verbunden ist, wobei das Relaisventil (5) in den mit einem Druckspeicher (4) versehenen gesonderten Bremsmittelkreislauf der Zusatzbremsanlage zur Freigabe des Öldrucks des Druckspeichers (4) eingebunden ist.

2. Bremsanlage nach Anspruch 1, dadurch gekennzeichnet, daß dem Druckspeicher (4) in dem gesonderten Bremsmittelkreislauf zum Aufbau eines vorgegebenen Druckes das Pumpenaggregat (3) in Verbindung mit einem Druckbegrenzungsventil (10) und einem Druckschalter (11) vorgeschaltet ist.

3. Bremsanlage nach Anspruch 1 oder 2, dadurch gekennzeichnet, daß in den gesonderten Bremsmittelkreislauf der Anhängeeinheit ein Bremsflüssigkeits-Vorratsbehälter (1) und ein Saugfilter (2) eingebunden sind.

4. Bremsanlage nach einem der Ansprüche 1 bis 3, dadurch gekennzeichnet, daß zur Führung der beim Abbau des Druckes in der Zusatzbremsanlage zurückfließenden Bremsflüssigkeit eine Rückflußleitung (12) angeordnet ist.

5. Bremsanlage nach einem der Ansprüche 1 bis 4, dadurch gekennzeichnet, daß das Doppelrückschlagventil (6) der Hinterachse (9) der Zugeinheit zugeordnet ist.

6. Bremsanlage nach einem der Ansprüche 1 bis 5, dadurch gekennzeichnet, daß zwischen dem Doppelrückschlagventil (6) und dem Relaisventil (5) sowie in der Bremsleitung auf der Achse (13) der Anhängeeinheit Entlüftungsventile (7) angeordnet sind.

## Claims

1. Braking installation for a single-axle trailer unit detachably connected to a tractor unit, preferably a passenger car, with a hydraulic dual-circuit braking system for the tractor unit and a hydraulic auxiliary braking installation, which is supplied by way of a pump unit (3) and separately operable with interposition of a relay valve (5) controlled by fluid pressure, for the trailer unit, characterised thereby that a double non-return valve (6) is provided, both inlets of which are connected to a respective braking system of the dual-circuit braking system and the outlet of which is, for the control of the auxiliary braking installation, connected with the relay valve (5) controlled by fluid pressure, wherein the relay valve (5) is incorporated in the separate braking means circuit, which is provided with a pressure reservoir (4), of the auxiliary braking installation for the freeing of the oil pressure.

2. Braking installation according to claim 1, characterised thereby that the pump unit (3) in conjunction with a pressure-limiting valve and a pressure switch (11) is connected upstream of the pressure reservoir in the separate braking means circuit for the build-up of a predetermined pressure.

3. Braking installation according to claim 1 or 2, characterised thereby that a brake fluid reservoir container (1) and a suction filter (2) are incorporated in the separate braking means circuit of the trailer unit.

4. Braking installation according to one of claims 1 to 3, characterised thereby that a return flow duct (12) is arranged for conducting the brake fluid flowing back on decay of the pressure in the auxiliary braking installation.

5. Braking installation according to one of claims 1 to 4, characterised thereby that the double non-return valve (6) is associated with the rear axle (9) of the tractor unit.

6. Braking installation according to one of claims 1 to 5, characterised thereby that air bleed valves (7) are arranged between the double non-return valve (6) and the relay valve (5) as well as in the brake line on the axle (13) of the trailer unit.

## Revendications

1. Installation de freinage pour une unité remorquée à un seul essieu accrochée de façon détachable à une unité de traction, de préférence à une voiture particulière avec un système de freinage hydraulique à double circuit pour l'unité de traction et une installation de freinage additionnelle hydraulique pour l'unité remorquée, installation agissant séparément en interposant une vanne-relais (5) commandée par la pression du fluide et alimentée par un ensemble de pompage (3), installation de freinage caractérisée en ce que l'on prévoit une double soupape anti-retour (6), dont les deux entrées sont raccordées chacune à un système de freinage du système de freinage à double circuit, et dont la sortie est reliée à la vanne-relais (5) commandée par la pression du liquide pour commander l'installation additionnelle de freinage, la vanne-relais (5) étant incorporée dans le circuit particulier pourvu d'un réservoir sous pression (4) du moyen de freinage de l'installation additionnelle de freinage pour libérer l'huile sous pression du réservoir sous pression (4).

2. Installation de freinage selon la revendication 1, caractérisée en ce que l'ensemble de pompage (3) en liaison avec une soupape de limitation de pression (10) et un manocontacteur (11) est monté en amont du réservoir sous pression (4) dans le circuit de moyen de pression particulier pour établir une pression prédéfinie.

3. Installation de freinage selon la revendication 1 ou 2, caractérisée en ce que dans le circuit de moyen de freinage particulier de l'unité remorquée sont incorporés un réservoir (1) de liquide de freinage et un filtre d'aspiration (2).

4. Installation de freinage selon l'une des revendications 1 à 3, caractérisée en ce que l'on dispose une conduite de retour (12) pour amener le liquide de freinage revenant dans l'installation de freinage additionnel lors de la chute de la pression.

5. Installation de freinage selon l'une des revendications 1 à 4, caractérisé en ce que la double soupape anti-retour (6) est associée à l'essieu arrière (9) de l'unité de traction.

6. Installation de freinage selon l'une des revendications 1 à 5, caractérisée en ce que des soupapes de mise à l'air (7) sont disposées entre le double clapet de non retour (6) et la vanne-relais (5) ainsi que la conduite de freinage sur l'essieu (13) de l'unité remorquée.
